**Europäisches Patentamt**

**European Patent Office**

**Office européen des brevets**

(19)

(11) **EP 1 126 255 A2**

(12) **EUROPEAN PATENT APPLICATION**

(43) Date of publication:
**22.08.2001 Bulletin 2001/34**

(51) Int Cl.⁷: **G01J 3/12**

(21) Application number: **01301392.5**

(22) Date of filing: **16.02.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **16.02.2000 JP 2000037642**

(71) Applicant: **Saitama University Urawa city, Saitama Pref. (JP)**

(72) Inventor: **Toyooka, Satoru Saitama Pref. (JP)**

(74) Representative: **Fenlon, Christine Lesley et al Haseltine Lake & Co., Imperial House, 15-19 Kingsway London WC2B 6UD (GB)**

(54) **An imaging spectral device**

(57)     An imaging spectral device for use in the spectrum image analysis for performing the spectroscopic analysis of the respective points in two dimensional field is disclosed. The device comprises an imaging spectral device composing a white-light source to illuminate an object to be measured, a tunable filter located in the optical path between the object and the white-light source, a driving mechanism for wavelength scanning of the tunable filter, and a control unit in which scanning rate of transmitting wavelength of the tunable filter is controlled by the above-mentioned driving mechanism in such a manner that the spectral transmittance of the tunable filter integrated within the exposure time becomes desired spectral distribution of the object to be measured.

*FIG. 1*

EP 1 126 255 A2

## Description

Background of the Invention

Field of the Invention

The present invention relates to an spectral imaging device in which spectral distribution of a color object is analyzed .

Related Art Statement

Recently, the spectral image analysis of two-dimensional field becomes important in wide fields of such as remote sensing, medical images, environmental sensing, microscope images, fluorescent analysis, celestial observation, and quality control of a production job site, the preservation and the restoration of clothes, the cosmetics industry and the work of art of the painting etc. Various methods are proposed in the past about the technique of the spectral image analysis, especially, the multispectral image analyzing method, in which a targeted field is observed through plural band-pass filters covering the observation band, is used in general. In this case, huge amount of form data has to be acquired when the number of filters are increased to improve the wavelength resolution, further. For example, the visible wavelength band (400 nm-700 nm) is equally divided by the wavelength band of 10 nm, one field is processed as 31 images passed through 31 filters.

Though such a multispectral image analyzing methods are widely used today, because of their high reliability today, there are drawbacks that it takes much time for data acquisition and processing and the intensity of level on a detection becomes low, when band-pass filters with narrow bandwidth are used. To alleviate such problem spectral data compression and any kinds of parallel processing can be introduced.

In the above mentioned multispectral image analyzing methods, a large amount of obtained data is generally used to identify classify substances in the field by using techniques of the multivariate analysis, and sued to make some decision band on the analyzing result.

The present inventor has already proposed a method in which the spectroscopic feature in the targeted field is previously acquired by the learning, small number of optimized filter functions are derived based on the acquired spectroscopic feature, and the spectroscopic feature of the respective points in the object field is analyzed by using the filter function. According to this method, if the inner product of filter function W(λ) shown by the multidimensional vector and the spectral reflection factor (or, the spectral transmission factor) O(λ) of the subject body is calculated, the spectral reflection factor of the target body can be obtained from a linear operation to them, the subject body is classified according to the spectroscopic feature, and the parameter can be presumed, quantitatively.

Here, the calculation of the inner product can be performed on the computer, but in order thereto, the spectral reflection factor of the object must be known, so that the above problem is not resolved. Therefore, the filter function should be realized physically and the inner product should be physically obtained.

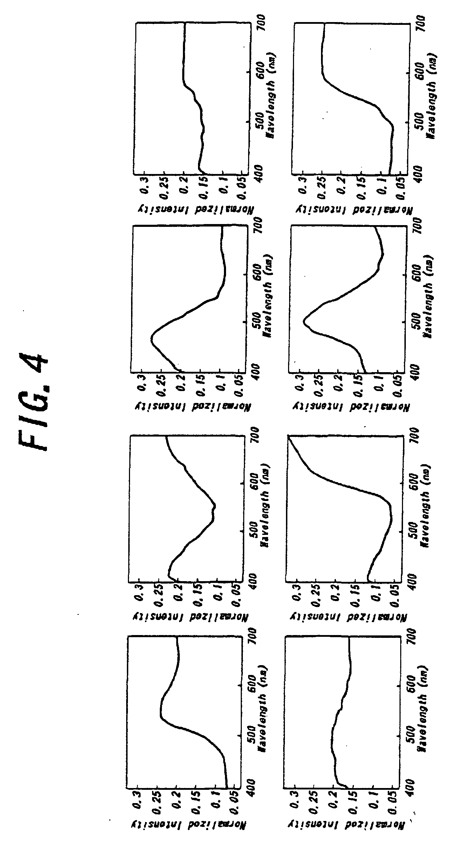

Moreover, The method of optimizing the spectroscopic feature includes the section space method being a kind of the principal component analysis and the method according to the neural net work. As an example, Fig. 4 shows eight filter functions in which the spectral reflection factor data of Munsell chroma 1269 colors are optimized on the neural net work as the learning data.

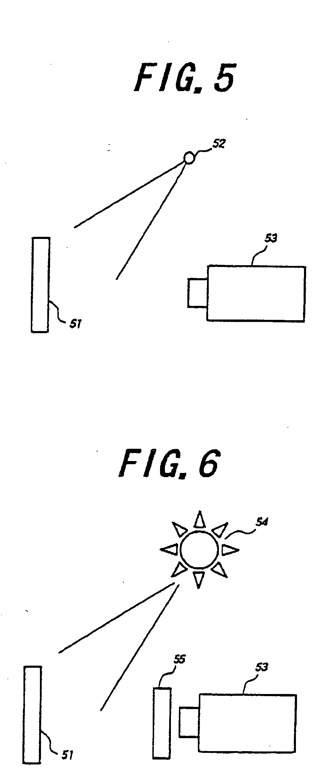

The imaging device based on such a concept can be divided into an active type in Fig. 5 and a passive type in Fig. 6. In the device for imaging the spectrum image in active type shown in Fig. 5, a measured object 51 is illuminated by an optimization light source 52, and the monochrome image is imaged by an imaging element 53 such as CCD cameras. Here, the optimized light source 52 is controlled in such a manner that the spectral distribution of the illumination light corresponds to the filter function. In such a way, the spectrum strength of the light reflected by the object to be measured 51 becomes equal to the inner product of the filter function and the spectral reflection factor of the object to be measured 51.

Moreover, in the imaging spectral device of the passive type shown in Fig. 6, the object to be measured 51 is illuminated by an arbitrary white light source 54, and the monochrome image is imaged by the imaging element 53 through an optimized filter 55 of the transmission type, by which the optimized filter function is implemented. In such a way, the light transmitted through the optimized filter 55 is proportional to the inner product of the filter function and the spectral reflection factor of the object to be measured 51.

As an optimized light source 52 used for the imaging spectral device of an active type, the present inventor has already proposed a light source device as shown in Fig. 7 of Japanese patent No. 2669173. In this light source device, the light from the white light source 61 with flat distribution in wide spectrum band, for example a halogen lamp, is made incident on the diffraction grating 65 through the lens 62 and the slit 63 by the collimator lens 64 as the parallel light, and the diffracted light is made incident on the liquid crystal spatial light modulator 67 having, for example, the liquid crystal device through the cylindrical lens 66, thereby forming a dispersion image on the liquid crystal spatial light modulator 67. The liquid crystal spatial light modulator 67 spatially modulates the transmittivity by the signal from the driver (not shown), and thus the light transmitted through the liquid crystal spatial light modulator 67, is focused by the collective lens 68 and makes incident on the incident end of the optical fiber bundle 69. The optical fiber bundle 69 is constituted in such a manner that the fiber bundle becomes random very at the incident end and the emanation end, the object to be measured is illuminated as an illumination light by the light emanated from the emanation end of the optical fiber bundle 69.

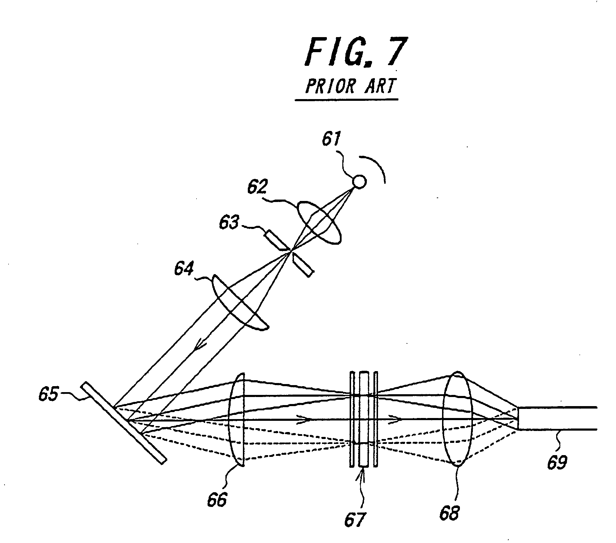

According to the light source device shown in Fig. 7, the light emanated from the optical fiber bundle 69 becomes the same light having the spectral distribution corresponding to the distribution written in the liquid crystal spatial light modulator 67. Therefore, when the measuring object with the spectral reflection factor $O(\lambda)$ is illuminated by such light, the spectrum strength $I(\lambda)$ of the light reflected by the observing object can be represented by following expression (1), assuming that the spectroradiometer strength of the light source device is $L(\lambda)$, the wavelength characteristic of the optical system is $E(\lambda)$, and the transmittivity of the liquid crystal spatial light modulator 67 changes only in the x direction, and is $W [x(\lambda)]$.

$$I(\lambda) = L(\lambda)\, E(\lambda)\, W [x(\lambda)]\, O(\lambda) \qquad (1)$$

Moreover, as an optimized filter 55 used for the imaging device of the above passive type the present inventor has already developed a wide-band transmittivity variable filter 71 as shown in Fig. 8 (Japanese Patent Application Opened No. 69275/1999). This wideband transmittivity variable filter 71 realizes a rewritable transmission spectral filter, and for example, a liquid crystal spatial light modulator 72 and a linear variable wavelength filter 73 are stuck together to form a filter body, and then the filler body is secured to the linear stage and is moved with the constant speed during exposure time of the imaging element 53. Here, the linear variable wavelength filter 73 changes the transmitted wavelength with narrow-band according to the position of the filter, and thus the transmittivity of the transmitted wavelength is modulated by the spatial light modulation machine 72 in stage plane.

In this case, assuming that the spectroradiometer strength of the illumination light is $L(\lambda)$, the spectral reflection factor of the object to be measured 51 is $O(\lambda)$, the wavelength transmittivity characteristic of the linear variable wavelength filter 73 is $V(\lambda)$, and the transmittivity of the liquid crystal spatial light modulator 72 is changed only in the x direction and is $W [x(\lambda)]$, then, the spectrum strength $I(\lambda)$ of the light incident on the imaging element 53 can be expressed as following expression (2).

$$I(\lambda) = L(\lambda)\, V(\lambda)\, W [x(\lambda)]\, O(\lambda) \qquad (2)$$

However, according to a further research of the present inventor, in the imaging spectral device of active type utilizing a light source device shown in Fig. 7, there are a lot of component numbers of optical elements constituting the light source device, so that the constitution becomes complicated and the assembly becomes troublesome and upsized.

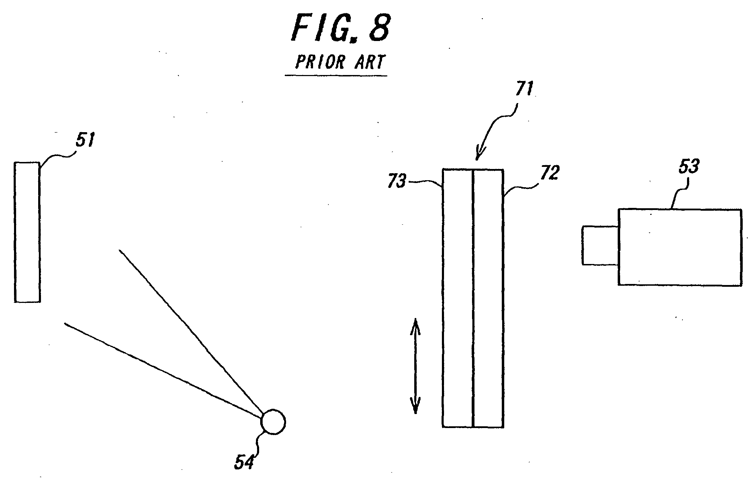

Moreover, it is found that as shown in Fig. 8, in the imaging spectral device of the passive type using the wide-band transmittivity variable filter 71, the constitutions are easier than the active type, but the filter body formed by sticking the liquid crystal spatial light modulator 72 and the linear variable wavelength filter 73, are stuck together, together, should be mechanically scanned on the linear stage, so that the device is upsized, and it becomes a trouble in speeding-up.

In addition, even in each imaging spectral device of the active type and the passive type, in case of using the liquid crystal spatial light modulator, the transmittivity is modulated, for example, in the x direction. so that the modulator having a lattice electrode should be used as a liquid crystal element. Therefore, by the diffraction due to the lattice electrode of the liquid crystal element, in the case of the passive type, the image noise appears on the image plane of the imaging element, so that it was feared that a clear spectrum image can not be obtained easily. Therefore, in the case of the active type, it was feared that the spatial distribution of the light focused by the condenser lens 68 shown in Fig. 7 appears as irregular color. Moreover, almost of the liquid crystal spatial light modulator widespread today has its performance which is guaranteed only in the visible region (400 nm-700 nm), and in the current state, it is difficult to apply to the non-visible region, so that it was feared that the utilization field of the imaging spectral device is limited.

Summary of the Invention

Preferred embodiments of the present invention seek to climinate the above described disadvantages of the conventional imaging spectral device.

Furthermore, the present invention advantageously provides an imaging spectral device, in which constitution can be easily with small size, speeding-up can be facilitated. Moreover, neither the image noise nor irregular color due to the diffraction are caused, and a clear spectrum image can be imaged anytime with a wide-ranged wavelength region, thereby being capable of expanding the utilization field.

According to one aspect of the present invention there is provided an imaging spectral device composing an imaging element to take monochromatic images of an object to be measured, a tunable filter located in the optical path between the object and the imaging element, a driving mechanism for wavelength scanning of the tunable filter, and a control unit in which scanning rate of transmitting wavelength of the tunable filter is controlled by the above-mentioned driving mechanism in such a manner that the spectral transmittance of the tunable filter integrated within the exposure time becomes desired spectral distribution of the object to the measured.

According to the present invention, there is provided an imaging spectral device composing a white-light source to illuminate an object to be measured, a tunable filter located in the optical path between the object and the white-light source, a driving mechanism for wavelength scanning of the tunable filter, and a control unit in which scanning rate of transmitting wavelength of the tunable filter is controlled by the above-mentioned driving mechanism in such a manner that the spectral transmittance of the tunable filter integrated within the exposure time becomes desired spectral distribution of the object to be measured.

According to the present invention, there is provided an imaging spectral device composing a tunable light source for illuminating an object to be measured, a control unit for scanning a radiation wavelength of the tunable light source, an imaging element to take monochromatic images of the object illuminated by the tunable light source, and a control unit in which scanning rate of transmitting wavelength of the tunable light source is controlled in such a manner that the spectral intensity of the tunable light source resultant from integration within the exposure time becomes desired spectral distribution of the object to be measured.

In a preferred embodiment of the present invention, the unit controls the scanning rate the transmitting wavelength of the tunable filters by means of the driving mechanism in such a manner that the spectral transmittances of the tunable filters becomes desired optimized filter functions previously designed based on the spectroscopic properties of the object to be measured.

In a preferred embodiment of the present invention, a control unit control the scanning rate of the spectral intensity of the tunable light source by means of the driving unit in such a manner that the spectral intensity of the tunable light source becomes a desired optimized filter function previously designed based on the spectroscopic properties of the object in the target scene.

For a better understanding of the present invention, and to show how the same may be carried into effect, reference will now be made, by way of example, to the accompanying drawings, in which:-

Fig. 1 is a block diagram showing the constitution of the principal portion of the first embodiment of an imaging spectral device according to the present invention;

Fig. 2 is a block diagram showing the constitution of the principal portion of the second embodiment;

Fig. 3 is a block diagram showing the constitution of the principal portion of the third embodiment;

Fig. 4 is a characteristic view showing eight optimized filter functions;

Fig. 5 is a conceptual diagram of the imaging device of active type;

Fig. 6 is a conceptual diagram of the device of the imaging of the spectrum image of passive type;

Fig. 7 is a constitution explanatory view showing the constitution of the light source device previously proposed by the present inventor as an optimization light source shown in Fig. 5; and

Fig. 8 is a constitution explanatory view showing the imaging device of passive type utilizing the wide-band transmission factor variable filter previously proposed by the present inventor.

Detailed Explanation of the Preferred Embodiment

Now to the drawings, there arc shown various embodiments of an imaging spectral device according to the present invention. Like parts are shown by corresponding reference characters throughout several views of the drawings.

Hereafter, the embodiment of the present invention is explained with reference to the drawing.

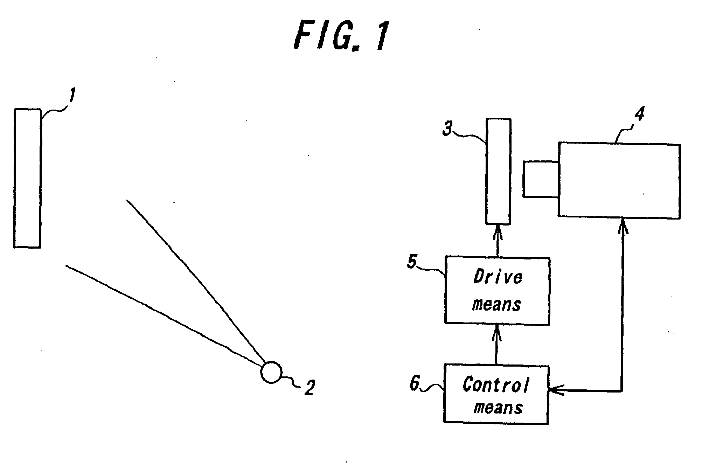

Fig. 1 is a block diagram showing the constitution of the principal portion of first embodiment of an imaging spectral device according to the present invention.

This imaging device is an device of passive type, an object to be measured 1 is illuminated by any white light source 2, and the monochrome image is imaged by an imaging elements 4 such as vidicon cameras and CCD cameras or the like through a tunable filter 3.

The tunable filter 3 spatially has an even transmitted wavelength distribution, and is a filter capable of being arbitrarily selecting the transmitted wavelength by an electric control from the outside, so that well-known filters such as for example liquid crystal tunable filters and acoustooptic tunable filters can be used.

Tunable filter 3 scans the transmitted wavelength from the shorter wavelength side to the longer wavelength side by the driving means 5, or from the longer wavelength side to the shorter wavelength side, and the scanning rate of the radiation wavelength due to the driving means 5 is controlled timewise according to the desired optimized filter function previously derived based on the spectroscopic feature in the field targeted by the imaging element 4, by the control means 6 consisting of the computer or the like during the exposure time of the object to be measured 1 according to the imaging element 4. That is, the scanning rate is slowed down in the wavelength region with a high transmission factor, and the scanning rate is made fast in the wavelength region with a low transmission factor.

Thus, the radiation intensity $I(\lambda)$ of each wavelength transmitted through the tunable filter 3 is given by the following expression (3), assuming that the spectroradiometer strength of the white light source 2 is $L(\lambda)$, the spectral reflection factor (or, transmittivity) of the object to be measured I is $O(\lambda)$, the wavelength transmittivity characteristic of the tunable filter 3 of usual utilization, by which the radiation wavelength is not controlled

timewise, is F($\lambda$), the transmittivity of the tunable filter 3 at the time is W($\lambda$), and the scanning time function to wavelength of the tunable filter 3 is t($\lambda$).

$$I(\lambda) = L(\lambda) \, F(\lambda) \, W \, [t(\lambda)] \, O(\lambda) \qquad (3)$$

From the above expression (3), as it is clear that the light incident on the imaging element 4 depends on the wavelength distribution transmitted through the tunable filter 3 at a certain time. Therefore, assuming that the exposure time of imaging element 4 is T, the transmitted wavelength of the tunable filter 3 is scanned timewise therebetween, the spectral distribution of the light wave taken in exposure time T is equal to the case that the object to be measured 1 is observed through the transmission filter of W($\lambda$).

According to the present embodiment, the tunable filter 3 is arranged immediately before the shedding of the monochrome imaging element 4, The tunable filter 3 is controlled electric and the transmitted wavelength is scanned in exposure time of object to be measured 1 according to imaging element 4, and the scanning rate thereof may be controlled timewise according to the desired filter function, so that the device can be constituted easily with small size, and the desired spectrum image can be obtained at high speed, compared with the case of using the mechanically scanned wideband transmittivity variable filter 71 shown in Fig. 8.

Moreover, the tunable filter 3 does not control the transmitted wavelength distribution timewise, but control it spatially, so that the filter region need not be spatially divided. Therefore, neither the image noise nor irregular color due to the diffraction are generated, so that a clear spectrum image can be obtained anytime.

Moreover, as a tunable filter, the filter having the transmitted wavelength band from the visible range to the near infrared range, can easily be obtained, recently, so that a clear spectrum image can be imaged anytime with a wide-ranged wavelength region. Therefore, the analysis of substance on image is performed with wide wavelength region by utilizing coloring reaction or the like and the state within the living body etc. is inspected by nondestructive method as an image by utilizing permeability of the near infrared light, or the like, and thus the present invention is not limited to the visible range, but can be used effectively even in various fields, thereby expanding the utilization field. Moreover, in this way, in the case that the spectrum image is imaged by a wide-ranged wavelength region, it is preferable to use the camera of imaging tube type such as a vidicon camera as the imaging element 4, since it possess the sensitivity over the wide range.

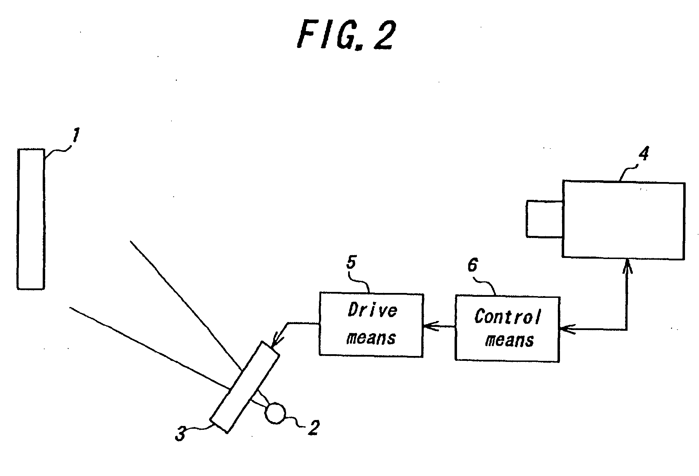

Fig. 2 is a block diagram showing the constitution of the principal portion of the second embodiment of the imaging spectral device according to the present invention. The imaging spectral device is an active type, in the constitution shown in Fig. 1, the tunable filter 3 is arranged between the white light source 2 and the object to be measured 1, and the light from the white light source 2 is irradiated on the object to be measured 1 through the tunable filter 3.

Even in the present embodiment, as in the same as the first embodiment, the transmitted wavelength of the tunable filter 3 is scanned by the driving means 5, and the scanning rate of the wavelength transmitted by the driving means 5 is controlled timewise by the control means 6 in exposure time of the object to be measured 1 by the imaging element 4 according to the desired optimized filter function previously derived.

Thus, when the object to be measured 1 is illuminated by the light which is radiated from the white light source 2, and is transmitted through the tunable filter 3, the radiation intensity of every wavelength incident on the imaging element 4 is given by the above expression (3), as a product of the spectroradiometer strength of the white light source 2, the spectral reflection factor (or, transmittivity) of the object to be measured 1, the wavelength transmittivity characteristic of the tunable filter 3 of usual utilization, the transmittivity of the tunable filter 3 at that time, and the scanning time function to the wavelength of the tunable filter 3.

That is, in the case of this embodiment, the light incident on the imaging element 4 depends on the wavelength distribution of the white light source 2 which is transmitted on the tunable filter 3 at a certain time, so that if the scan wavelength of the tunable filter 3 is scanned timewise during the exposure time T of the imaging element 4, the spectral distribution of the light wave taken in the exposure time T becomes equal to the illumination of object to be measured 1 by the light source having to which the radiation intensity distribution of W($\lambda$). Therefore, the same effect as the first embodiment can be achieved in this embodiment.

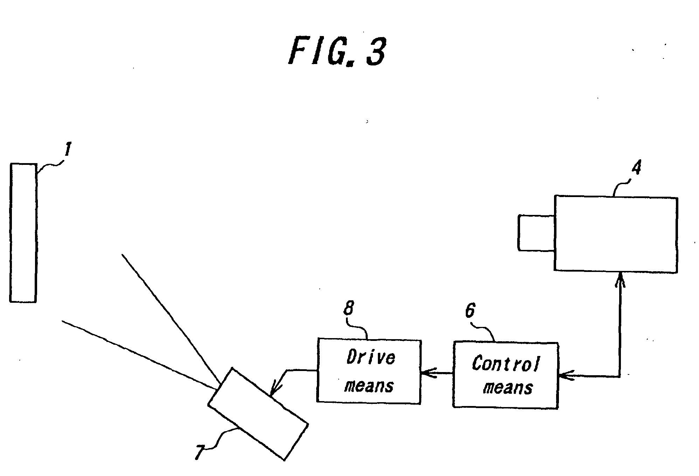

Fig. 3 is a block diagram showing the constitution of the principal portion of third embodiment of imaging spectral device according to the present invention. The imaging spectral device is an active type, and the object to be measured 1 is illuminated by using the tunable light source 7 as a light source, thereby imaging the monochrome image by the imaging element 4.

A tunable light source 7 is a light source to be able to select the spectral distribution of the radiation light arbitrarily by an electric control from the outside, and well-known members such as for example the tunable lasers and monochromators can be used.

The tunable light source 7 is arranged in such a manner that the wavelength of the radiation light is scanned from the shorter wavelength side to the longer wavelength side, by driving means 8 or from the longer wavelength side to the shorter wavelength side, and as in the above described embodiment, the scanning rate of the radiation wavelength by the driving means 8 is controlled timewise according to the desired optimized filter function previously derived based on the spectroscopic feature in the field targeted by the imaging element 4, by the control means 6 in the exposure time of the object to be measured 1 in accordance with the imaging element 4. That is, the scanning rate is slowed down in the wavelength region with a high transmission factor of the filter function, and is made fast in the wavelength region with a low transmission factor.

Thus, the radiation intensity I(λ) of every wavelength incident on the imaging element 4 is given by the following expression (4), assuming that the spectroradiometer characteristic of the tunable light source 7 of usual utilization, by which the radiation wavelength is not controlled timewise, is R(λ), the spectroradiometer strength of the tunable light source 7 at that time is W(λ), the scanning time function to the wavelength of the tunable light source 7 is L(λ), and the spectral reflection factor (or, transmittivity) of the object to be measured 1 is O(λ).

$$I(\lambda) = R(\lambda)\, W\, [L(\lambda)]\, O(\lambda) \qquad (4)$$

As is clear from the above formula (4), the light incident on the imaging element 4 depends on the wavelength distribution of the light radiated from the tunable light source 7 at a certain time. Therefore, assuming that the exposure time of the imaging element 4 is T, and the radiation wavelength of the tunable light source 7 is scanned timewise therebetween, as is the case shown in Fig. 2, the spectral distribution of the light wave taken in exposure time T is equal to the case that the object to be measured I irradiated by the light source having an emissive power distribution of W(λ) is observed. In other words, the same as the case of Fig. 1, the spectral distribution becomes equal to the case that the object to be measured 1 is observed through the transmission type filter of W(λ),

According to the present embodiment, the tunable light source 7 is used, and the radiation wavelength is scanned during the exposure time of the object to be measured 1 according to imaging element 4 by controlling the tunable light source 7, electrically, and thus the scanning rate may be controlled timewise according to the desired filter function, so that the device can be constructed easily and downsized as compared with die case of using the light source device 52 as shown in Fig. 7.

Moreover, the tunable light source 7 controls the spectral distribution of the radiation light not spatially and but timewise, so that neither the image noise nor the color shading due to the diffraction, and thus a clear spectrum image can be obtained anytime. Moreover, in case of using the tunable laser as the tunable light source 7, a wide wavelength range extending over the infrared region from the visible range is researched actively, and is put to practical use as the radiation wavelength band now, and thus these lasers are large in power with narrow-band in general and its utilization field can be expanded.

Moreover, in a described above embodiment, the spectral transmission factor and the spectroradiometer characteristic of the tunable filter 3 and the tunable light source 7 were controlled in such a manner that the imaging element 4 becomes a desired optimized filter function previously derived based on the spectrum academic feature of the target field, but these spectral transmission factor and the spectroradiometer characteristic can be controlled so as to obtain desired filter functions in addition to the optimized filter function.

As described above, in the imaging spectral device according to the present invention, a tunable filter is used, the scanning rate of the transmitted wavelength is controlled timewise so as to be made it desired spectral transmission factor within the exposure time of the object to be measured by the imaging element, and further in the other imaging spectral device, a tunable light source is used, the scanning rate of the radiation wavelength is controlled timewise so as to be made it desired spectroradiometer characteristic within the exposure time of the object to be measured by the imaging clement, so that even in each imaging spectral device, the device can constituted easily with small size, the speeding-up can be facilitated, and neither the image noise nor the irregular color due to the diffraction are caused, and thus a clear spectrum image can be imaged anytime by a wide-ranged wavelength region, thereby expanding the utilization field.

## Claims

1. An imaging spectral device comprising an imaging element to take monochromatic images of an object to be measured, an adjustable filter located in the optical path between the object and the imaging element, a driving mechanism for wavelength scanning of the adjustable filter, and a control unit in which the scanning rate of the transmitting wavelength of the adjustable filter is controlled by the driving mechanism such that the spectral transmittance of the adjustable filter, integrated within the exposure time, gives the spectral distribution of the object to be measured.

2. An imaging spectral device comprising a white-light source to illuminate an object to be measured, an adjustable filter located in the optical path between the object and the white-light source, a driving mechanism for wavelength scanning of the adjustable filter, and a control unit in which the scanning rate of the transmitting wavelength of the adjustable filter is controlled by the above-mentioned driving mechanism such that the spectral transmittance of the adjustable filter, integrated within the exposure time, gives the spectral distribution of the object to be measured.

3.  An imagining spectral device comprising an adjustable light source for illuminating an object to be measured, a control unit for scanning a radiation wavelength of the adjustable light source, an imaging element to take monochromatic images of the object illuminated by the light source, and a control unit in which the scanning rate of the transmitting wavelength of the light source is controlled such that the spectral intensity of the light source, when integrated within the exposure time, gives the spectral distribution of the object to be measured.

4.  An imaging spectral device as claimed in claim 1 or 2, wherein the control unit controls the scanning rate the transmitting wavelength of the adjustable filters by means of the driving mechanism, such that the spectral transmittances of the adjustable filters becomes desired optimized filter functions previously designed based on the spectroscopic properties of the object to be measured.

5.  An imaging spectral device as claimed in claim 3, wherein the control unit controls the scanning rate of the spectral intensity of the adjustable light source by means of the driving unit, such that the spectral intensity of the light source becomes a desired optimized filter function previously designed based on the spectroscopic properties of the object to be measured.

# FIG. 1

EP 1 126 255 A2

# FIG. 2

EP 1 126 255 A2

EP 1 126 255 A2

# FIG. 3

# FIG. 4

# FIG. 5

# FIG. 6

*FIG. 7*
PRIOR ART

# FIG. 8

PRIOR ART

EP 1 126 255 A2